# EUROPÄISCHE PATENTANMELDUNG

(11) **EP 1 422 489 A2**
(43) Veröffentlichungstag der Anmeldung: **26.05.2004**
(21) Anmeldenummer: 03023407.4
(22) Anmeldetag: 17.10.2003
(51) Int. Cl.: F28F 21/06, F28F 9/16, F28F 9/02

(54) **Wärmeaustauscher**

(30) Priorität: 22.11.2002 DE 10254797
(71) Anmelder: GEA LUFTKÜHLER GmbH, 44809 Bochum (DE)
(72) Erfinder: Heier, Jürgen, 47259 Duisburg (DE)
(74) Vertreter: Bockermann, Rolf, Dipl.-Ing.

(57) **Zusammenfassung**

Der Wärmeaustauscher (2) weist mehrere nebeneinander verlaufende Austauscherrohre (3-6) auf. Diese sind mit ihren Endabschnitten (7) in einem Rohrboden (8) als Bestandteil einer Verteil- oder Sammelkammer (13) dicht lagefixiert. Der einen umfangsseitigen Flansch (9) aufweisende Rohrboden (8) besteht aus einem druck- und temperaturbeständigen Kunststoff (24). Die Austauscherrohre (3-6) sind mit umfangsseitigen Ausziehsicherungen (17-20) ausgestattet und in den Rohrboden (8) eingegossen. Außerdem sind in dem Flansch (9) Gewindehülsen (10) fixiert. Der Rohrboden (8) und der Flansch (9) sind ferner mit Armierungen (12) ausgerüstet. Die Lagefixierung der Endabschnitte (7) in dem Rohrboden (8) erfolgt in einer Form (21).

## Beschreibung

Die Erfindung richtet sich auf einen Wärmeaustauscher gemäß den Merkmalen im Oberbegriff des Patentanspruchs 1.

Ein derartiger Wärmeaustauscher ist in diversen Ausführungsformen bekannt. Die Austauscherrohre können aus Metall oder aus Kunststoff bestehen und zumindest teilweise berippt sein.

Zur Festlegung der Endabschnitte der Austauscherrohre in Rohrböden als zumindest mittelbare Bestandteile von Verteil- und/oder Sammelkammern können in die Rohrböden Löcher eingebracht werden, in denen die Endabschnitte dicht eingeschweißt oder eingewalzt werden. Die Fixierung der Austauscherrohre in den Rohrböden ist mit einem erheblichen Aufwand verbunden. Zunächst ist es erforderlich, einen Rohrboden zuzuschneiden, ihn dann zu bearbeiten und in den Rohrboden die notwendige Anzahl von Löchern einzubringen. Anschließend müssen die Austauscherrohre mit ihren Endabschnitten in Löchern fixiert werden. Abgesehen von diesem Fertigungsaufwand kann nicht immer sichergestellt werden, dass in den Spalt zwischen einem Loch und dem Endabschnitt eines Austauscherrohrs Spaltkorrosion vermieden wird.

Wenn im vorliegenden Fall von sich nebeneinander erstreckenden Austauscherrohren die Rede ist, so können diese parallel zueinander verlaufen oder sich gegebenenfalls in einem geringen Winkel zueinander erstrecken. Des Weiteren ist es denkbar, dass die Austauscherrohre zumindest abschnittsweise schlangenlinienförmig verlaufen.

Die Verteil- und/oder Sammelkammern sind in der Regel so ausgebildet, dass sie über abnehmbare Deckel den Zugang zu den Austauscherrohren ermöglichen, um eine Inspektion und Reinigung durchführen zu können.

Der Erfindung liegt - ausgehend vom Stand der Technik - die Aufgabe zugrunde, einen Wärmeaustauscher zu schaffen, der mit geringerem Fertigungsaufwand in kürzerer Zeit herstellbar ist.

Diese Aufgabe wird mit den im kennzeichnenden Teil des Patentanspruchs 1 angegebenen Merkmalen gelöst.

Danach besteht jeder Rohrboden nunmehr aus einem druck- und temperaturbeständigen Kunststoff. Hierunter wird ein Kunststoff verstanden, der einen Einsatz bis ca. 100 °C im Dauerbetrieb und kurzzeitig bis 200 °C standhält. Die Druckhöhe kann bis etwa 100 bar ansteigen.

Die Endabschnitte der Austauscherrohre werden mit umfangsseitigen Ausziehsicherungen ausgestattet, so dass sie in dem Rohrboden einwandfrei lagefixiert sind.

Im Vergleich zum Stand der Technik ist jetzt nur noch ein Arbeitsschritt erforderlich, um die endseitig vorbereiteten Austauscherrohre in einem Rohrboden festzulegen. Außerdem wird mit der Erfindung eine Spaltkorrosion im Rohrboden vermieden. Darüberhinaus ist es möglich, einen Korrosionsschutz der Austauscherrohre zwischen den endseitigen Rohrböden in Form beispielsweise einer Zinkbeschichtung oder eines Bimetallrohrs durchzuführen.

Als Austauscherrohre können glatte und berippte Metallrohre aus Stahl, Vanadium, Kupfer oder Messing zur Anwendung kommen. Auch Kunststoffrohre aus Polypropylen, Polyurethan oder PEX (vernetztes Polyethylen) können zum Einsatz gelangen. Der für die Rohrböden verwendete Kunststoff kann PU (Polyurethan), PP (Polypropylen), Kunstharz, Epoxidharz oder ein vernetztes PU (Polyurethan) sein.

Die Konfiguration der Rohrböden ist beliebig und abhängig davon, um welche Wärmeaustauscher es sich handelt. Das heißt, die Böden können rund oder auch rechteckig sein.

Die Erfindung schafft also die Voraussetzungen dafür, dass geringe Bündelgewichte erzielt werden, so dass auch die Kosten für die Traggerüste gesenkt werden können. Es ist ferner eine schnelle Ersatzteilbeschaffung möglich.

Besonders vorteilhaft erweist sich die Erfindung bei Luft/Flüssigkeits-Wärmeaustauschern, bei welchen in den Austauscherrohren ein flüssiges Medium strömt und die Austauscherrohre umfangsseitig von Kühlluft angeströmt werden.

Gemäß den Merkmalen des Patentanspruchs 2 sind die Rohrböden trogartig ausgebildet und jeweils mit einem umfangsseitigen Flansch versehen, in den metallische Gewindehülsen eingegossen oder eingespritzt sind. Diese Weiterbildung schafft die Voraussetzung dafür, dass bis auf die Deckel auch die Verteil- und/oder Sammelkammern in ein- oder mehrteiliger Ausführungsform, gegebenenfalls mit Trennwänden, einstückig mit den Rohrböden gefertigt werden können. Die Deckel können über die Gewindehülsen und Schraubbolzen mit den umfangsseitigen Flanschen dicht verbunden werden.

Darüberhinaus ist es jetzt möglich, dass entsprechend Patentanspruch 3 die Rohrböden mit Flansche aufweisenden metallischen Stutzenrohren versehen sind. Das heißt, die Zulauf- und Ablaufeinrichtungen für die diversen Medien können ebenfalls direkt oder indirekt mit den Rohrböden dicht und korrosionsspaltfrei verbunden werden.

Damit die Rohrböden oder auch die Verteil- bzw. Sammelkammern einem höheren Druck standhalten können, sind die Rohrböden und gegebenenfalls auch die Flansche entsprechend den Merkmalen des Patentanspruchs 4 mit Armierungen versehen. Die Armierungen können aus Glasfasern, Metalldrähten oder Karbonfasern gebildet sein.

Eine Möglichkeit der Gestaltung der Ausziehsicherungen an den Endabschnitten der Austauscherrohre wird in den Merkmalen des Patentanspruchs 5 gesehen. Danach sind die Ausziehsicherungen durch umfangsseitige Sicken gebildet.

Eine weitere Ausführungsform einer Ausziehsicherung besteht in den Merkmalen des Patentanspruchs 6. Hierbei handelt es sich um trichterartige Aufbördelungen.

Nach Patentanspruch 7 sind die Ausziehsicherungen durch umfangsseitig der Endabschnitte der Austauscherrohre befestigte Ringe gebildet.

Schließlich kann es nach Patentanspruch 8 auch denkbar sein, dass die Endabschnitte der Austauscherrohre aufgerauht sind, um lagefixiert in den Kunststoffböden festgelegt zu sein.

Ein vorteilhaftes Verfahren zur Herstellung von Wärmeaustauschern mit sich nebeneinander erstreckenden Austauscherrohren ist in den Merkmalen des Patentanspruchs 9 gekennzeichnet. Danach werden zunächst die Endabschnitte der Austauscherrohre umfangsseitig mit Ausziehsicherungen versehen. Anschließend werden die Austauscherrohre in der jeweils vorgesehenen Konfiguration in senkrechter Lage in einer Gieß- oder Spritzform ausgerichtet, die entsprechend der gewünschten Kontur der Rohrböden ausgebildet ist. Nach der Ausrichtung werden die Endabschnitte mit einem druck- und/oder temperaturbeständigen Kunststoff umgossen bzw. umspritzt. Nach Abkühlung des Kunststoffs kann die Form entfernt werden. Vor oder bei dem Umgießen bzw. Umspritzen können zugleich Armierungen eingebracht und/oder auch bei zusätzlich an die Rohrböden angesetzten umfangsseitigen Flanschen in diese sowohl Stutzenrohre mit Flanschen als auch Gewindehülsen eingebettet werden.

Die Erfindung ist nachfolgend anhand von in den Zeichnungen dargestellten Ausführungsbeispielen näher erläutert. Es zeigen:
- Figur 1: im vertikalen Längsschnitt den Endbereich eines Wärmeaustauschers in vier verschiedenen Ausführungsformen;
- Figur 2: eine Ansicht auf den Wärmeaustauscher der Figur 1 entlang der Linie II-II in Richtung der Pfeile IIa gesehen und
- Figur 3: im vertikalen Querschnitt eine Vorrichtung zur Herstellung eines Austauscherrohre fixierenden Rohrbodens eines Wärmeaustauschers.

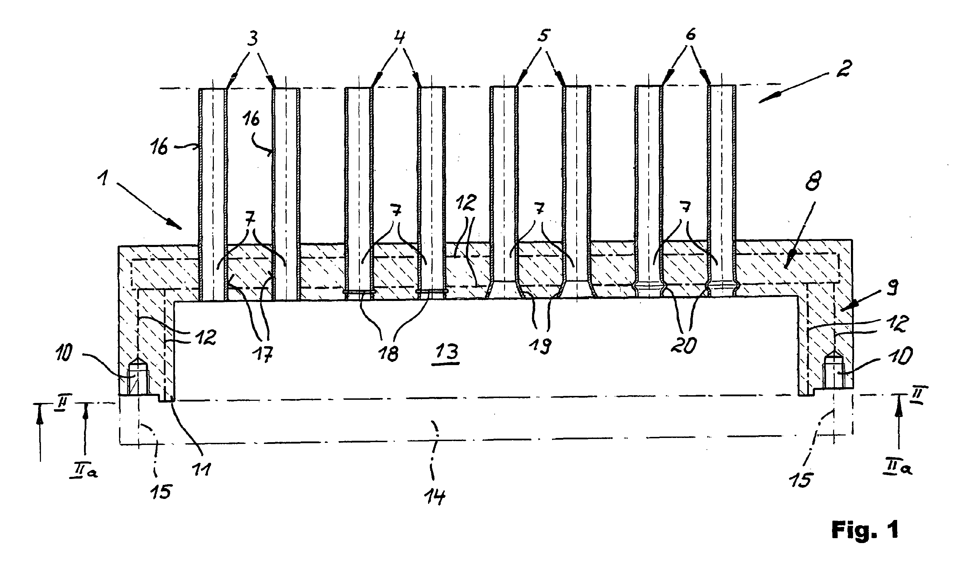

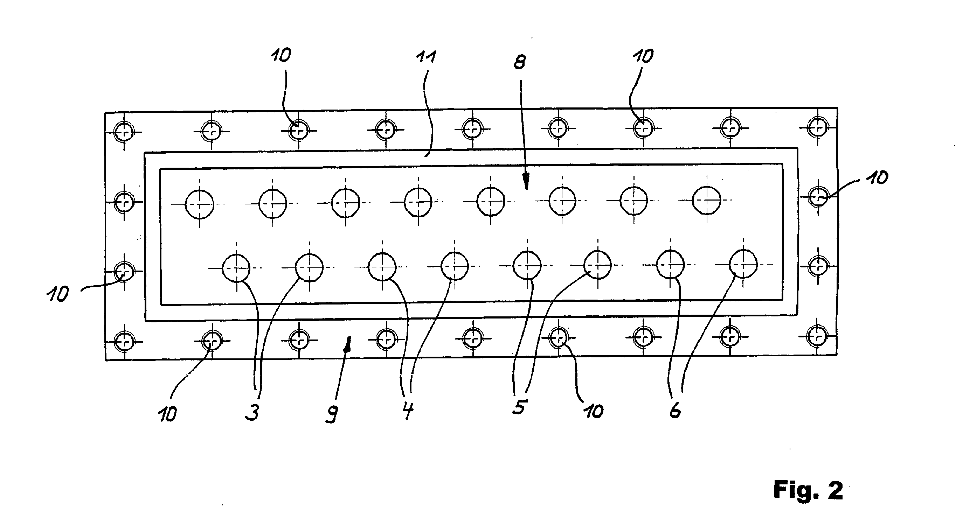

In Figur 1 ist mit 1 ein Endabschnitt eines ansonsten nicht näher dargestellten und beschriebenen Wärmeaustauschers 2 bezeichnet, der mehrere nebeneinander verlaufende Austauscherrohre 3-6 aufweist. Die Austauscherrohre 3-6 sind mit ihren Endabschnitten 7 in einen Rohrboden 8 aus Kunststoff lagefixiert eingegossen (siehe auch Figur 2). Der Rohrboden 8 ist trogartig ausgebildet und mit einem umfangsseitigen Flansch 9 versehen, in den metallische Gewindehülsen 10 eingegossen sind. Außerdem ist stirnseitig des Flansches 9 ein umlaufender Zentrierkragen 11 vorgesehen.

In dem Rohrboden 8 und in dem Flansch 9 erstrecken sich stabilisierende Armierungen 12.

Durch den Rohrboden 8 und den Flansch 9 wird eine Verteil- oder Sammelkammer 13 gebildet, die durch einen Deckel 14 dicht verschlossen werden kann. Dazu werden in die Gewindehülsen 10 eindrehbare Schraubbolzen 15 verwendet, die nur durch Mittellinien dargestellt sind.

Die Lagefixierung der beiden Austauscherrohre 3 erfolgt dadurch, dass die äußeren Oberflächen 16 der Austauscherrohre 3 mit umfangsseitigen Aufrauhungen 17 versehen sind.

Bei den Austauscherrohren 4 sind umfangsseitig Ringe 18 befestigt, welche die Ausziehsicherungen bilden.

Bei den Austauscherrohren 5 sind die Ausziehsicherungen an den Endabschnitten 7 durch trichterartige Aufbördelungen 19 gebildet.

Im Falle der Austauscherrohre 6 sind die Ausziehsicherungen durch umfangsseitige Sicken 20 gebildet.

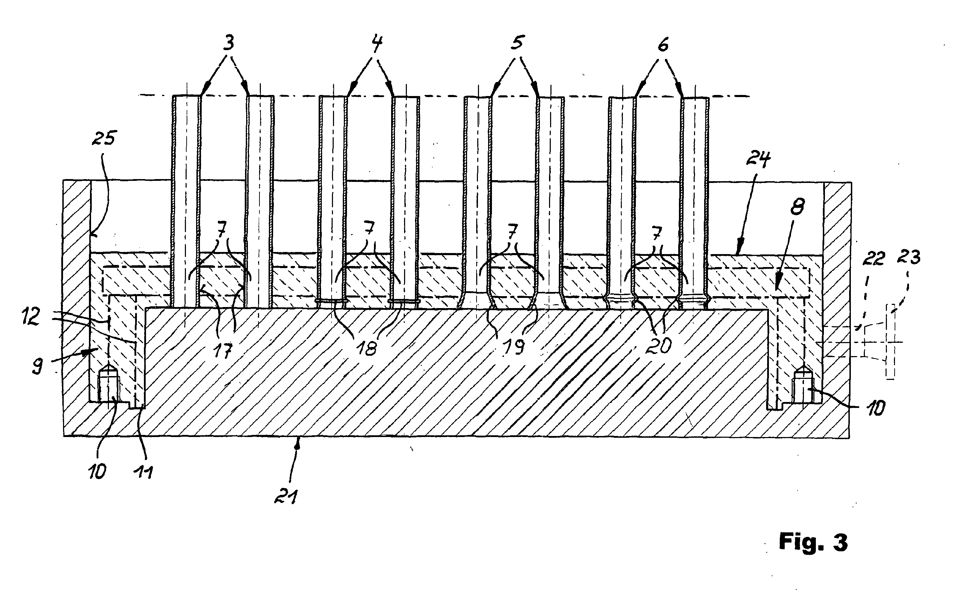

Zur Herstellung des Rohrbodens 8 mit Flansch 9 gemäß den Figuren 1 und 2 und zur Lagefixierung der Austauscherrohre 3-6 dient eine aus der Figur 3 erkennbare Gießform 21 mit einer dem anzufertigenden Rohrboden 8 mit Flansch 9 angepassten Innenkontur 25.

Nach dem Herstellen der Ausziehsicherungen 17-20 an den Endabschnitten 7 der Austauscherrohre 3-6 werden diese in senkrechter Ausrichtung mit den Endabschnitten 7 in der Gießform 21 ausgerichtet. Danach werden die Gewindehülsen 10 lagefixiert sowie die Armierungen 12 eingebracht. Gegebenenfalls kann mindestens ein Stutzenrohr 22 mit Flansch 23 zusätzlich lagefixiert werden.

Nunmehr wird in die Form aushärtbarer Kunststoff 24 eingegossen. Nach dem Aushärten sind die Endabschnitte 7 der Austauscherrohre 3-6 in dem Rohrboden 8, die Armierungen 12 im Rohrboden 8 sowie im Flansch 9 und die Gewindehülsen 10 sowie die Stutzenrohre 22 in dem Flansch 9 lagefixiert.

### Bezugszeichenaufstellung:

- 1 -: Endabschnitt von 2
- 2 -: Wärmeaustauscher
- 3 -: Austauscherrohre
- 4 -: Austauscherrohre
- 5 -: Austauscherrohre
- 6 -: Austauscherrohre
- 7 -: Endabschnitte von 3-6
- 8 -: Rohrboden
- 9 -: Flansch
- 10 -: Gewindehülsen in 9
- 11 -: Zentrierkragen
- 12 -: Armierungen
- 13 -: Verteil-/Sammelkammer
- 14 -: Deckel
- 15 -: Schraubbolzen
- 16 -: äußere Oberflächen von 3
- 17 -: Aufrauhungen an 16
- 18 -: Ringe an 4
- 19 -: Aufbördelungen an 5
- 20 -: Sicken an 6
- 21 -: Gießform
- 22 -: Stutzenrohr
- 23 -: Flansch an 21
- 24 -: Kunststoff
- 25 -: Innenkontur von 21

## Patentansprüche

1. Wärmeaustauscher, der mehrere nebeneinander verlaufende Austauscherrohre (3-6) aufweist, die mit ihren Endabschnitten (7) in Rohrböden (8) als zumindest mittelbare Bestandteile von Verteil- und/oder Sammelkammern (13) dicht lagefixiert sind, **dadurch gekennzeichnet, dass** die Rohrböden (8) aus einem druck- und temperaturbeständigen Kunststoff (24) bestehen, in den die mit umfangsseitigen Ausziehsicherungen (17-20) ausgestatteten Endabschnitte (7) der Austauscherrohre (3-6) eingegossen oder eingespritzt sind.

2. Wärmeaustauscher nach Patentanspruch 1, **dadurch gekennzeichnet, dass** die Rohrböden (8) trogartig ausgebildet und jeweils mit einem umfangsseitigen Flansch (9) versehen sind, in den metallische Gewindehülsen (10) eingegossen oder eingespritzt sind.

3. Wärmeaustauscher nach Patentanspruch 1 oder 2, **dadurch gekennzeichnet, dass** die Rohrböden (8) mit Flansche (23) aufweisenden metallischen Stutzenrohren (22) versehen sind.

4. Wärmeaustauscher nach einem der Patentansprüche 1 bis 3, **dadurch gekennzeichnet, dass** die Rohrböden (8) und geegbenenfalls auch die Flansche (9) mit Armierungen (12) versehen sind.

5. Wärmeaustauscher nach einem der Patenansprüche 1 bis 4, **dadurch gekennzeichnet, dass** die Ausziehsicherungen (20) an den Endabschnitten (7) der Austauscherrohre (6) durch Sicken gebildet sind.

6. Wärmeaustauscher nach einem der Patentansprüche 1 bis 4, **dadurch gekennzeichnet, dass** die Ausziehsicherungen (19) an den Endabschnitten (7) der Austauscherrohre (5) durch trichterartige Aufbördelungen gebildet sind.

7. Wärmeaustauscher nach einem der Patentansprüche 1 bis 4, **dadurch gekennzeichnet, dass** die Ausziehsicherungen (18) an den Endabschnitten (7) der Austauscherrohre (4) durch umfangsseitig befestigte Ringe gebildet sind.

8. Wärmeaustauscher nach einem der Patentansprüche 1 bis 4, **dadurch gekennzeichnet, dass** die Ausziehsicherungen (17) an den Endabschnitten (7) der Austauscherrohre (3) durch umfangsseitige Aufrauhungen (17) der äußeren Oberflächen (16) gebildet sind.

9. Verfahren zur Herstellung von Wärmeaustauschern (2) mit sich nebeneinander erstreckenden Austauscherrohren (3-6), die mit ihren Endabschnitten (7) in Rohrböden (8) lagefixiert sind, **dadurch gekennzeichnet, dass** die Endabschnitte (7) der Austauscherrohre (3-6) umfangsseitig mit Ausziehsicherungen (17-20) versehen, dann in senkrechter Lage in einer Gieß- oder Spritzform (21) ausgerichtet und danach mit einem druck- und temperaturbeständigen Kunststoff (24) umgossen bzw. umspritzt werden.
